# EUROPEAN PATENT APPLICATION

(11) **EP 4 831 643 A1**
(43) Date of publication of application: **28.10.2026**
(21) Application number: 24906847.9
(22) Date of filing: 25.09.2024
(51) Int. Cl.: G01N 35/04, B65G 54/02

(54) **SPECIMEN CONTAINER CARRIER AND CONVEYANCE DEVICE**

(30) Priority: 19.12.2023 JP 2023214318
(71) Applicant: Hitachi High-Tech Corporation, Minato-ku Tokyo 105-6409 (JP)
(72) Inventor: HARADA, Masataka, Tokyo 105-6409 (JP); YASUI, Akihiro, Tokyo 105-6409 (JP)
(74) Representative: MERH-IP Matias Erny Reichl Hoffmann Patentanwälte PartG mbB
(86) International application number: PCT/JP2024/034049
(87) International publication number: WO 2025/134458

(57) **Abstract**

[Problem]

This disclosure provides a sample container carrier and a transfer apparatus in which their speeds are adjusted more easily than conventional ones, featuring both easiness to move and easiness to stop.

[Solution]

A sample container carrier 11 includes a first structural body 30 and a second structural body 40 which contact with a transfer surface 21 on which the sample container carrier 11 will move smoothly. The first structural body 30 has a ring-shaped magnetic element 32 and the second structural body 40 has a holder 42 for a sample container 10. A space 50 is defined between the first structural body 30 and the second structural body 40. The first structural body 30 and the second structural body 40 are coupled so as to be movable relatively to each other in a vertical direction. The first structural body 30 has a coefficient of friction that is smaller than the coefficient of friction of the second structural body 40.

## Description

### Technical Field

The present invention relates to a sample container carrier used for transferring a sample and a transfer apparatus in a sample inspection automation system that performs processing necessary for analysis of a biological sample (hereinafter referred to as a "sample") such as blood, plasma, serum, urine, or other body fluids.

### Background Art

As an example of a laboratory sample distribution system and a corresponding operation method, which are highly flexible and provide high transfer performance, PTL 1 discloses a laboratory sample distribution system including: several sample carriers each of which includes at least one magnetically active device, preferably at least one permanent magnet, and which carry sample containers; a transfer surface for carrying the sample carriers; and several electro-magnetic actuators that are stationary arranged below the transfer surface and that move the sample carriers on the transfer surface by applying a magnetic force to the sample carriers.

### Citation List

### Patent Literature

PTL 1: JP2017-77971A

### Summary of Invention

### Technical Problem

In recent years, automation has been advanced in sample inspections for the purpose of diagnosis in the medical field. A sample inspection automation system performs various analyses on a sample.

A sample transfer apparatus is required to flexibly transfer a sample with high processing capability. A transfer method that satisfies this requirement is a method in which a sample container carrier capable of carrying one sample container injected with a sample is transferred by an electromagnetic force.

In this method, a magnetic field is generated by a plurality of electromagnets fixed below a transfer surface on which the sample container carrier slides, and a magnetic element incorporated in the sample container carrier is attracted to cause the sample container to slide. It is possible to transfer the sample container carrier in two-dimensional directions by arranging the electromagnets in a lattice shape. Therefore, it is possible to avoid a traffic jam or a failure point of the sample container carrier, and achieve flexible transfer with high processing capability.

The magnetic field is generated by supplying a current to the electromagnets. A transfer speed of the sample container carrier is adjusted by increasing or decreasing the supplied current. In order to transfer a sample without scattering, it is necessary to supply a current of an appropriate magnitude so that the sample container carrier does not significantly accelerate or decelerate.

During the transfer of the sample container carrier, the magnetic element in the sample container carrier receives an electromagnetic force in an obliquely downward direction, thereby generating a friction force between the sample container carrier and the transfer surface. During transfer at an acceleration and at a constant speed, a dynamic friction force between the sample container carrier and the transfer surface is generated in a direction opposite to an advancement direction of the sample container carrier, and thus the transfer is hindered. On the other hand, during transfer at a deceleration, the dynamic friction force contributes to deceleration of the sample container carrier.

When the dynamic friction force increases and decreases along with an increase and a decrease in the electromagnetic force for adjusting a transfer speed of the sample container carrier, a braking force and thrust are increased and decreased at the same time, it is difficult to adjust the speed, and it is difficult to stably transfer a sample without scattering the sample. In order to facilitate the speed adjustment, it is necessary that the dynamic friction force remains constant regardless of an increase or a decrease in the electromagnetic force.

PTL 1 discloses a method of transferring a sample container carrier by an electromagnetic force, and in the sample container carrier, a magnetic element is incorporated in a structure that comes into surface contact with a transfer surface. However, in this method, since a component having a large coefficient of dynamic friction with the transfer surface receives an electromagnetic force, there is a problem that a dynamic friction force generated at the sample container carrier greatly increases or decreases as a current supply amount for adjusting speed increases or decreases.

The invention provides a sample container carrier and a transfer apparatus in which their speeds are adjusted more easily than those in the related art, featuring both easiness to move and easiness to stop.

### Solution to Problem

In order to solve the above problem, the invention includes a plurality of means, but only one of them will be described as an example. A sample container carrier is a sample container carrier that holds a sample container containing a sample and is transferred by an electromagnetic force. The sample container carrier includes a first structural body and a second structural body that come into contact with a transfer surface on which the sample container carrier slides, in which the first structural body has a magnetic element, the second structural body has a holder for holding the sample container, a space is defined between the first structural body and the second structural body, the first structural body and the second structural body are coupled so as to be movable relatively to each other in a vertical direction, and the first structural body has a coefficient of friction smaller than a coefficient of friction of the second structural body.

### Advantageous Effects of Invention

According to the invention, it is possible to provide a sample container carrier and a transfer apparatus in which speeds are easy to adjust, featuring both easiness to move and easiness to stop. Problems, configurations, and effects other than those described above will be clarified by the following description of embodiments.

### Brief Description of Drawings

[FIG. 1] Fig. 1 is a schematic diagram of a sample inspection automation system equipped with a sample transfer system according to an embodiment 1.
[FIG. 2] Fig. 2 is an outlined diagram of a transfer apparatus as a constituent component of the sample transfer system according to the embodiment 1.
[FIG. 3] Fig. 3 is a cross-sectional side view of a sample container carrier according to the embodiment 1.
[FIG. 4] Fig. 4 is a bottom view of the sample container carrier according to the embodiment 1.
[FIG. 5] Fig. 5 is a diagram depicting an electromagnetic force simulation model.
[FIG. 6] Fig. 6 is a graph representing a result of an electromagnetic force simulation.
[FIG. 7] Fig. 7 is a graph representing dynamic friction force in a case where a sample container carrier has an undivided structure.
[FIG. 8] Fig. 8 is a graph representing dynamic friction force exerted on the sample container carrier according to the embodiment 1.
[FIG. 9] Fig. 9 is a graph representing a distribution of speed of the sample container carrier according to the embodiment 1.
[FIG. 10] Fig. 10 is a graph representing a distribution of speed of a sample container carrier of a reference example.
[FIG. 11] Fig. 11 is a cross-sectional side view of a sample container carrier having another structure according to the embodiment 1.
[FIG. 12] Fig. 12 is a bottom view of the sample container carrier having another structure according to the embodiment 1.
[FIG. 13] Fig. 13 is a cross-sectional side view of a sample container carrier according to a second embodiment.
[FIG. 14] Fig. 14 is a cross-sectional side view of a sample container carrier according to a third embodiment.

### Description of Embodiments

Hereinafter, embodiments of a sample container carrier and a transfer apparatus according to the invention will be described with reference to the drawings. In the drawings used in the present description, the same or corresponding components are denoted by the same or similar reference signs, and repeated descriptions of these components may be omitted.

### <Embodiment 1>

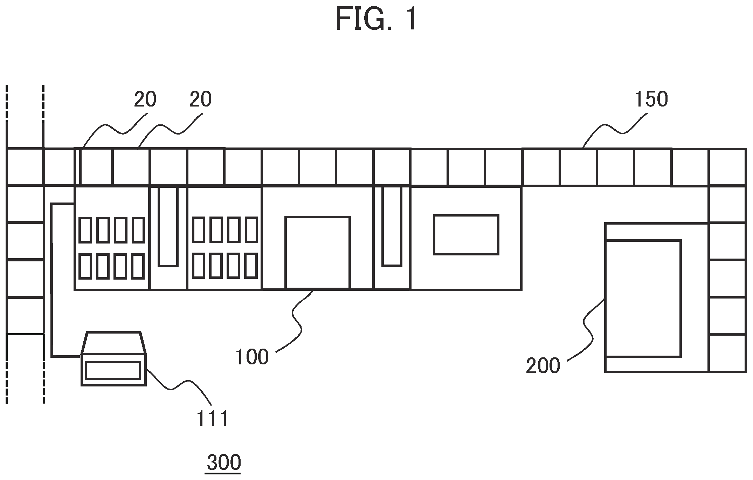

An embodiment 1 of a sample container carrier and a transfer apparatus according to the invention will be described with reference to FIGS. 1 to 12.

First, an overall configuration of a sample inspection automation system will be described with reference to FIG. 1. FIG. 1 is a diagram showing a configuration example of the sample inspection automation system.

A sample inspection automation system 300 according to present embodiment shown in FIG. 1 includes a sample preprocessing apparatus 100, an automatic analyzer 200, a sample transfer apparatus 150 and a system control device 111.

The sample preprocessing apparatus 100 is an apparatus for executing various kinds of preprocessing and post-processing required for analyzing a sample in the automatic analyzer 200. The sample preprocessing apparatus 100 includes one or more processing units that perform various kinds of processing such as sample receiving processing, centrifugal separation processing, processing of acquiring sample information such as a liquid amount, sample container cap opening processing, and dispensing processing of dividing a sample into portions to be supplied to a plurality of sample containers.

The automatic analyzer 200 is a module for actually performing an analysis on a sample.

The configuration of the sample preprocessing apparatus 100 and automatic analyzer 200 may be any known configuration, and the number thereof may be one or more as required.

The sample transfer apparatus 150 is connected to the sample preprocessing apparatus 100, the automatic analyzer 200, and the like, and is an apparatus for transferring a sample container carrier 11 between these apparatuses and in each apparatus. The sample transfer apparatus 150 is provided with one or more transfer modules 20 for transferring a sample by an electromagnetic force.

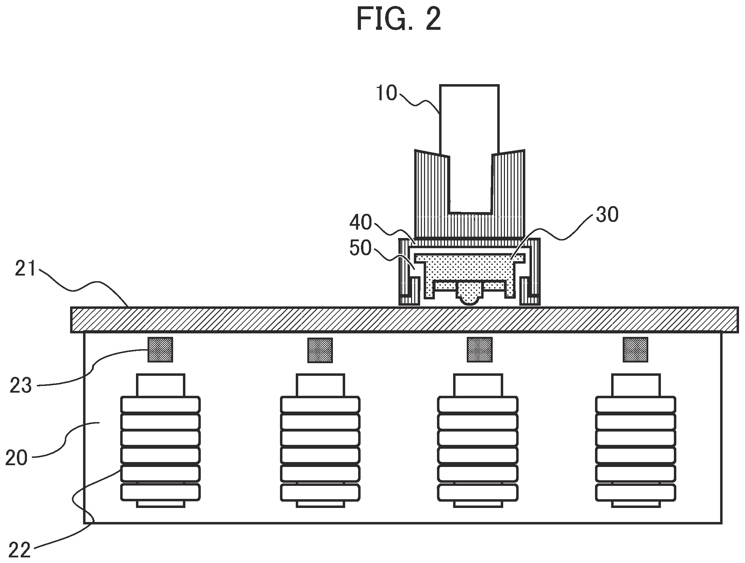

In the sample inspection automation system 300, a sample to be inspected is transferred in the sample inspection automation system 300 in a state where the sample is injected into a sample container 10 shown in FIG. 2 and in a state where the sample container 10 is inserted into the sample container carrier 11. Various kinds of processing are performed by the sample preprocessing apparatus 100 and the automatic analyzer 200.

The sample for which the preprocessing is completed is transferred to the automatic analyzer 200 by the sample transfer apparatus 150. The automatic analyzer 200 performs various kinds of analysis processing on the sample. The sample for which the analysis processing is completed is transferred to a necessary location according to inspection contents of each sample, such as being transferred and stored in a sample storage unit provided in the sample preprocessing apparatus 100 by the sample transfer apparatus 150.

Next, an example of the configuration of the transfer module 20 will be described with reference to FIG. 2. FIG. 2 is a side view showing an example of the configuration of the transfer module 20.

As shown in FIG. 2, each of the transfer modules 20 constituting the sample transfer apparatus 150 includes a transfer surface 21 on which the sample container carrier 11 for holding the sample container 10 accommodating a sample slides, and a plurality of electromagnets 22 that are disposed below the transfer surface 21 and transfer the sample container carrier 11 by electromagnetic forces.

The transfer surface 21 provided in the transfer module 20 shown in FIG. 2 is a smooth surface, and the electromagnets 22 and sensors 23 are arranged at equal intervals on a back surface side of (below) the transfer surface 21.

The electromagnet 22 includes a core made of a magnetic element, and a coil wound around an outer periphery of the core. The sensor 23 is used for detecting a position of the sample container carrier 11 on the transfer surface 21. Examples of the sensor 23 include a magnetic sensor using a magnetic element in the sample container carrier 11 and an optical sensor. The electromagnet 22 itself may play a role of the sensor instead of providing the sensor 23.

One sample container 10 is mounted in the sample container carrier 11, and a magnetic element is incorporated in the sample container carrier 11. Therefore, it is possible to attract or repel the magnetic element in the sample container carrier 11 by supplying a current to the electromagnet 22 to generate a magnetic field on the transfer surface 21. As a result, the sample container carrier 11 can slide on the transfer surface 21 along the arrangement of the electromagnets 22 in two-dimensional directions to transfer a sample to a desired position. That is, the sample container carrier 11 holds the sample container 10 that accommodates a sample and is transferred by an electromagnetic force.

As described above, the sample transfer apparatus 150 includes a plurality of the transfer modules 20 and is formed with a transfer path.

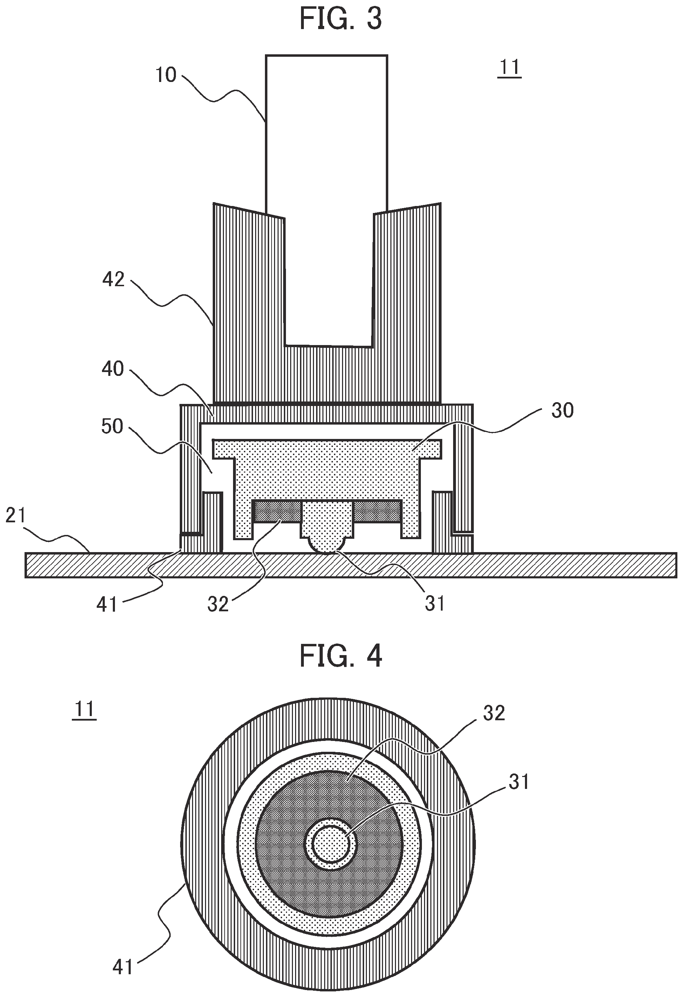

The feature configuration and effect of the sample container carrier according to the invention will be described with reference to FIGS. 3 and 4. FIG. 3 is a cross-sectional side view showing the sample container carrier according to Embodiment 1, and FIG. 4 is a bottom plan view showing the sample container carrier according to Embodiment 1.

As shown in FIGS. 3 and 4, the sample container carrier 11 according to Embodiment 1 is separated into two structures including a first structural body 30 and a second structural body 40, both of which come into contact with the transfer surface 21 on which the sample container carrier 11 slides during transfer.

As shown in FIGS. 3 and 4, the sample container carrier 11 according to Embodiment 1 is formed with a space 50 defined between the first structural body 30 and the second structural body 40, and the first structural body 30 and the second structural body 40 are coupled so as to be movable relative to each other in a vertical direction.

The first structural body 30 has at least one ball bearing 31 provided on the transfer surface 21 side at a location where the first structural body 30 comes into contact with the transfer surface 21 with a small coefficient of friction, and a ring-shaped magnetic element 32. The sample container carrier 11 is carried by an electromagnetic force acting between the ring-shaped magnetic element 32 and the electromagnets 22 below the transfer surface 21.

The ring-shaped magnetic element 32 is made of a permanent magnet such as neodymium or ferrite. The ring-shaped magnetic element 32 may be made of another magnet or a magnetic element, or a combination of these magnets as appropriate.

The second structural body 40 includes a bottom part 41 that is in contact with the transfer surface 21 and a holder 42 for holding the sample container 10. The bottom part 41 and the holder 42 are preferably formed of a non-magnetic material, so that it is desirable that the electromagnetic force and the magnetic force act on only the above first structural body 30.

The bottom part 41 of the second structural body 40 is in surface contact with the transfer surface 21. On the other hand, since the first structural body 30 is roughly in point contact with the transfer surface 21 using the ball bearing 31 as described above, a coefficient of friction of the first structural body 30 against the transfer surface 21 is smaller than a coefficient of friction of the second structural body 40.

Results of verifying the effects will be described below.

When the sample container carrier 11 is located above the electromagnet 22 and receives a magnetic force, or when the sample container carrier 11 receives an electromagnetic force during transfer, the above-described first structural body 30 receives a force in a downward direction, so that the ball bearing 31 comes into contact with the transfer surface 21. The coefficient of dynamic friction between the ball bearing 31 and the transfer surface 21 is about 0.05 or less, and a change in a dynamic friction force accompanying with a change in an electromagnetic force during transfer is very small.

During this time, the bottom part of the second structural body 40 is constantly in contact with the transfer surface 21, and a constant dynamic friction force caused by the gravity of the second structural body 40 of the sample container carrier 11, the sample container 10, and a sample acts.

When the structure of the sample container carrier is not divided into the first structural body 30 and the second structural body 40 as in the present embodiment, and when the electromagnetic force acts on a bottom part having a large coefficient of friction, if a large current is supplied to the electromagnet, a dynamic friction force acting in a direction that hinders advancement also increases. Therefore, advancement of the sample container carrier may be hindered and adversely affect the speed adjustment. In order to avoid this problem, it is necessary to finely adjust a current supply amount in order to adjust the speed so as to avoid sample scattering. Therefore, a change in the dynamic friction force accompanying with a change in the current supply amount makes it difficult to adjust the speed of the sample container carrier.

On the other hand, by dividing the structure as in Embodiment 1, only the thrust for advancing the sample container carrier 11 is increased or decreased when the current supply amount is increased or decreased, which makes it easy to adjust the speed.

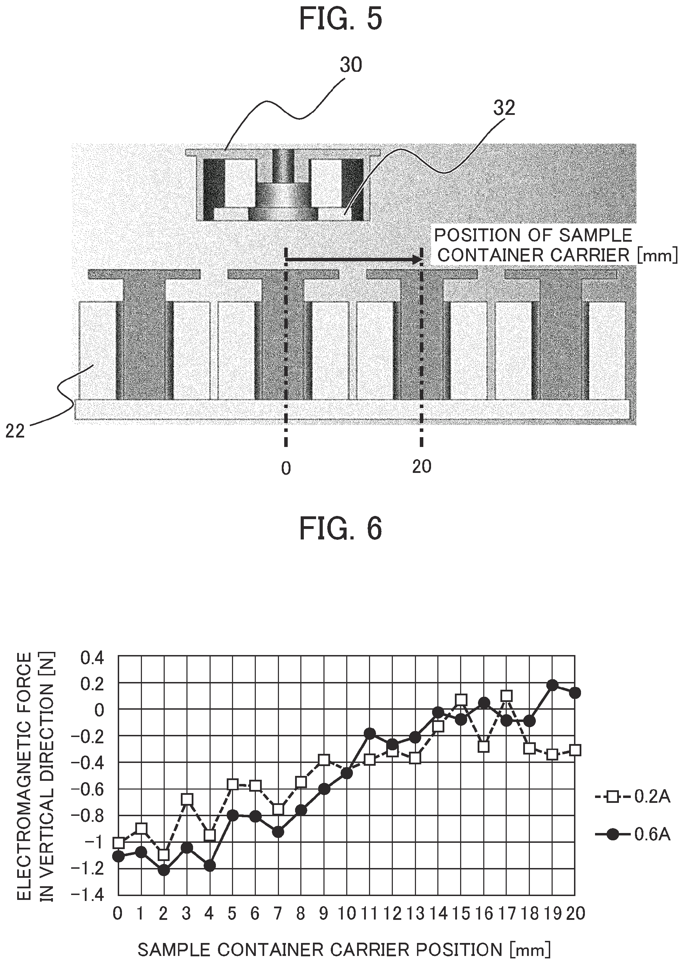

FIGS. 5 to 8 show results obtained by comparing dynamic friction forces by simulating, by electromagnetic field analysis software JMAG, electromagnetic forces received by the sample container carrier 11 when a sample carrier is transferred with and without structural separation.

FIG. 5 shows an analysis model of JMAG. The first structural body 30, the ring-shaped magnetic element 32, and the electromagnet 22 were created as a model. An electromagnetic force in a vertical direction when a position of the first structural body 30 was moved from 0 [mm] to 20 [mm] was simulated using this model.

Current amounts to be supplied shall be 0.2 [A] and 0.6 [A]. 0.2[A] is a guide of a current amount to be supplied for generating an electromagnetic force as thrust when the sample container carrier 11 in Embodiment 1 is decelerated. 0.6 [A] is a current amount at acceleration.

FIG. 6 shows a generated electromagnetic force in the vertical direction. An upward vertical direction is positive. As the sample container carrier 11 moves away from the electromagnet 22 to which a current is supplied, the electromagnetic force decreases. In the case of a sample container carrier that is formed integrally without structure separation, a main portion of a sample carrier corresponding to the second structural body 40 receives an electromagnetic force at a part having a large friction force, thereby generating a dynamic friction force. On the other hand, in the sample container carrier 11 as in Embodiment 1, only the first structural body 30 receives an electromagnetic force. Masses of the sample container carrier 11 were made equal, and generated dynamic friction forces were calculated and compared.

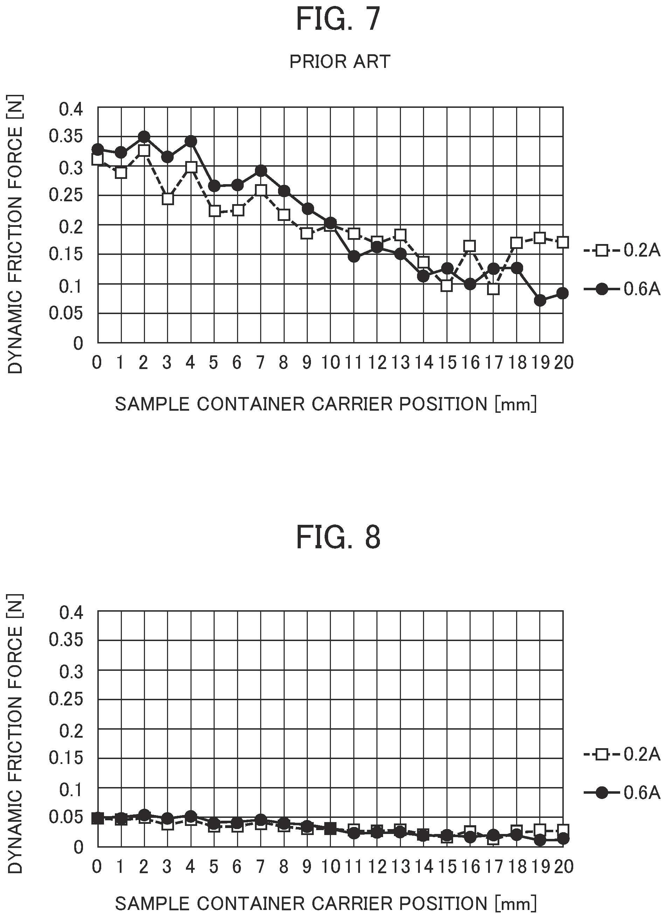

FIG. 7 shows a dynamic friction force generated when an electromagnetic force is received in the case of a structure in the related art in which a sample container carrier includes only a part of the second structural body 40 having a large coefficient of dynamic friction without structure separation, and FIG. 8 shows a dynamic friction force generated at the first structural body 30 in the sample container carrier 11 according to Embodiment 1. The dynamic friction force was calculated by multiplying the sum of forces in the following vertical direction by a coefficient of dynamic friction. Each coefficient of dynamic friction used values of components used in the sample container carrier 11 that actually performed a transfer experiment.

The forces in the vertical direction are the electromagnetic forces shown in FIG. 6 and the gravity caused by the mass of 55 [g] of the sample container carrier 11. The coefficient of dynamic friction is 0.2 in the sample container carrier in the related art without structure separation, and the coefficient of dynamic friction is 0.03 in the sample container carrier 11 according to Embodiment 1.

Based on FIGS. 7 and 8, it can be seen that a difference in the dynamic friction force generated at the sample container carrier 11 according to Embodiment 1, which is caused by a current supply amount, is smaller than that in the sample container carrier in the related art without structure separation.

It can be seen that the difference in the dynamic friction force corresponding to a position of the sample container carrier 11 is also small. This makes the dynamic friction force constant when transferring at a constant current supply amount, and facilitates the speed adjustment. For example, when the sample container carrier 11 is decelerated, a constant dynamic friction force acting between the bottom part of the second structural body 40 and the transfer surface 21 serves as an auxiliary brake.

As specific components of each structure, a combination of components of a sample container carrier that actually performed a transfer experiment and a coefficient of friction are as below. The following components were used for structures of the sample container carrier having the shape shown in FIG. 3 and the above transfer surface.

The first structural body used one ball bearing serving as a contact component and had the coefficient of dynamic friction of 0.01 to 0.05. The second structural body used a resin as a bottom component material and had a coefficient of dynamic friction of 0.2 to 0.3. A material of the transfer surface is glass.

Since the coefficient of friction of the above first structural body 30 that receives an electromagnetic force is small, a decrease in a current supply during transfer can be expected. In view of this, the sample container carrier 11 was created using the above-described bottom part the same as that of the sample container carrier 11 according to Embodiment 1 and filling the above-described space 50 be a non-separation structure, and the magnitude of a current that enables transfer was compared with that in Embodiment 1.

Specifically, a current of a certain magnitude was supplied to the electromagnet 22 for 50 [msec], and a minimum current that enables transfer of the sample container carrier 11 from a starting point to a position of 20 [mm] was compared.

As a result, the sample container carrier 11 according to Embodiment 1 in which only the first structural body 30 receives the electromagnetic force can be transferred at 300 [mA], whereas 700 [mA] was required for transferring the sample container carrier 11 in which the space was filled and the electromagnetic force also acts on the second structural body 40.

In addition to the constant dynamic friction force of the above-described second structural body 40, when a braking force is applied separately from the thrust by applying an electromagnetic force in a direction opposite to an advancement direction to the sample container carrier 11 at deceleration, it is possible to satisfy specifications for a stop position with a supply amount of about 100 [mA].

For example, when the sample container carrier 11, in which only the ball bearing 31 comes into contact with the transfer surface 21 in order to reduce the dynamic friction force as much as possible, is created and transferred, the sample container carrier 11 cannot be stopped at a target position with a braking force of 100 [mA], and stopped with a braking force of 300 [mA].

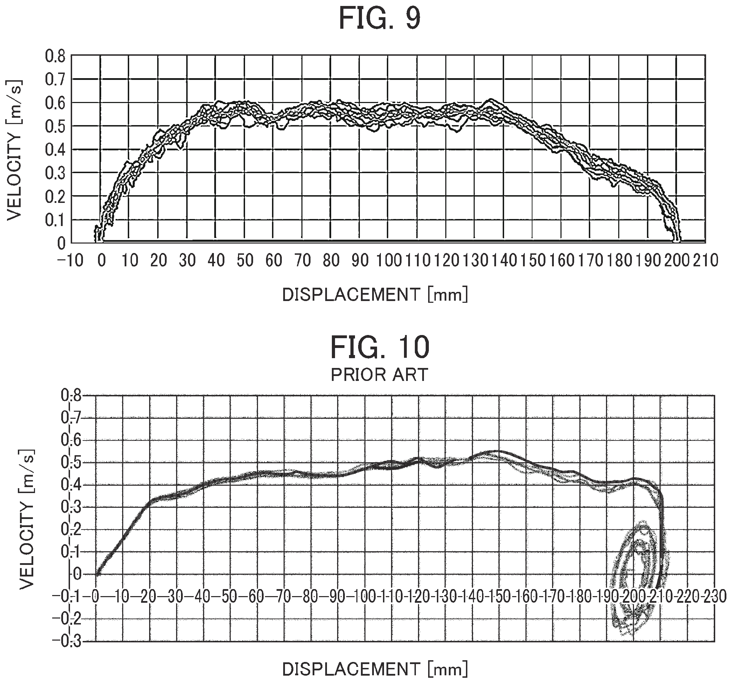

FIG. 9 shows a distribution of speed when the sample container carrier 11 according to Embodiment 1 was transferred ten times, and FIG. 10 shows a distribution of speed when the sample container carrier in which only the ball bearing comes into contact with the transfer surface 21 was transferred five times.

In FIG. 10, it can be seen that the sample container carrier reciprocates between positions before and after a stop position, whereas the sample container carrier 11 according to Embodiment 1 can be stopped uniquely by a constant friction force of the second structural body 40 as shown in FIG. 9.

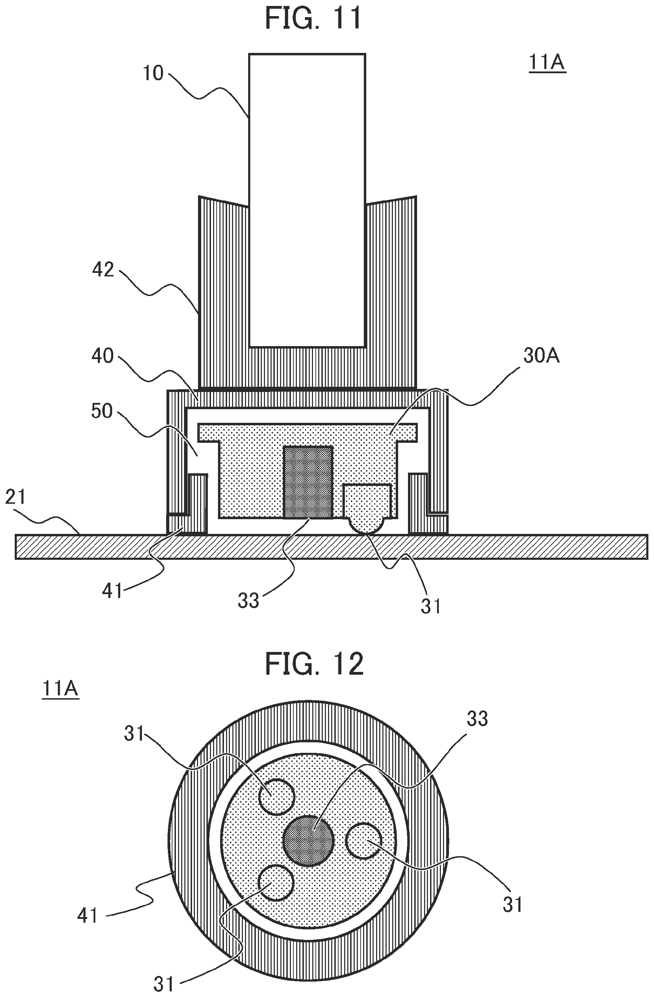

The number of the above ball bearings 31 is not limited to one as long as there is no problem in terms of dimensional constraints on the sample container carrier 11. Hereinafter, a modification will be described with reference to FIGS. 11 and 12. FIG. 11 is a cross-sectional side view showing a modification of the sample container carrier according to Embodiment 1, and FIG. 12 is a bottom view thereof.

For example, in a sample container carrier 11A shown in FIGS. 11 and 12, a cylindrical magnetic element 33 having a cylindrical shape can be used, and the plurality of ball bearings 31 can be provided.

The cylindrical magnetic element 33 is also made of a permanent magnet such as neodymium or ferrite, which is similar to the ring-shaped magnetic element 32. The cylindrical magnetic element 33 may be made of another magnet or a magnetic element, or a combination of these magnets as appropriate.

Next, effects of the present embodiment will be described.

The sample container carriers 11, 11A according to Embodiment 1 of the invention described above include the first structural bodies 30, 30A and the second structural body 40 that come into contact with the transfer surface 21 on which the sample container carrier 11, 11A slides. The first structural bodies 30, 30A have the ring-shaped magnetic element 32 or the cylindrical magnetic element 33. The second structural body 40 has the holder 42 for holding the sample container 10. The space 50 is formed between the first structural body 30, 30A and the second structural body 40. The first structural body 30, 30A and the second structural body 40 are coupled so as to be movable relative to each other in the vertical direction. The first structural body 30, 30A has a coefficient of friction smaller than a coefficient of friction of the second structural body 40.

Accordingly, an increase or decrease in a dynamic friction force accompanying with an increase or decrease in a current supply amount for adjusting a speed of the sample container carrier 11 can be made smaller than that in a structure in the related art, and thus only a change in an electromagnetic force is involved in a change in thrust, which facilitates the speed adjustment. In addition, since a constant dynamic friction force contributes to braking when the sample container carrier 11 is decelerated, it is possible to provide the sample container carrier 11 in which a speed is adjusted more easily than a structure in the related art, which achieves both easiness to move and easiness to stop.

Since the first structural bodies 30, 30A having the ring-shaped magnetic element 32 or the cylindrical magnetic element 33 comes into contact with the transfer surface 21 on which the sample container carriers 11, 11A slide, it is possible to prevent frequent change of a relative distance between the ring-shaped magnetic element 32 or the cylindrical magnetic element 33 and the electromagnet 22, and to prevent fluctuation of an electromagnetic force applied to the ring-shaped magnetic element 32 or the cylindrical magnetic element 33, thereby achieving more stable transfer.

The second structural body 40 is made of a non-magnetic material and an electromagnetic force and a magnetic force act on the first structural body 30 only, so that the second structural body 40 that does not receive an electromagnetic force can generate a constant friction force. Therefore, in addition to a matter that an increase or a decrease in the dynamic friction force during transfer can be made small, braking can be made stable by a constant friction force, and a speed of the sample container carrier 11 can be more easily adjusted.

Further, the first structural body 30 is provided with the ball bearing 31 on a side close to the transfer surface 21, so that the first structural body 30 that receives an electromagnetic force can be brought into contact with the transfer surface 21 in a state where a component having a small coefficient of friction such as the ball bearing 31 comes into contact with the transfer surface 21. Therefore, a change in the dynamic friction force accompanying with a change in the electromagnetic force can be made extremely small.

### <Embodiment 2>

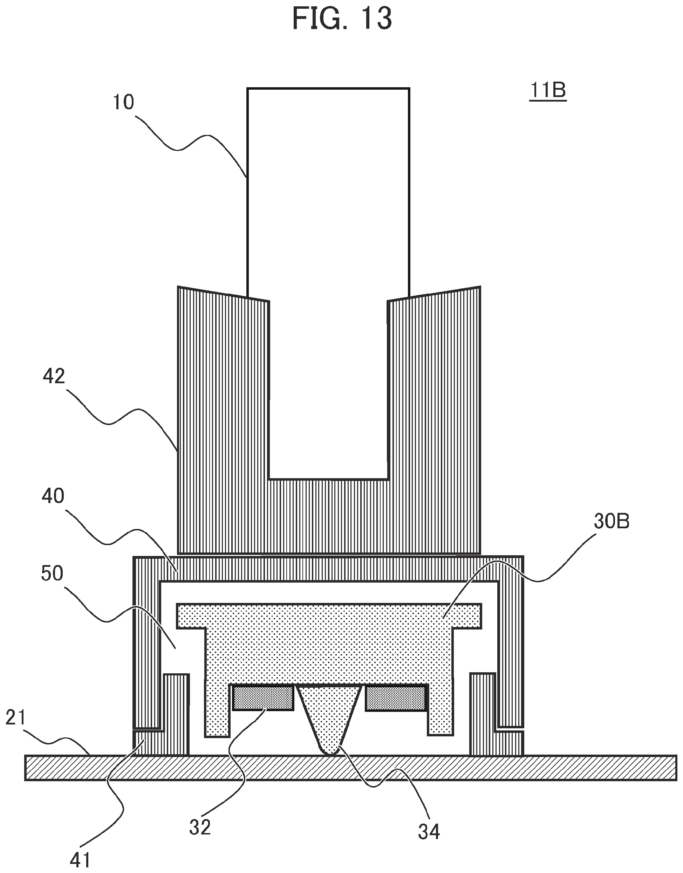

The sample container carrier 11 and a transfer apparatus according to Embodiment 2 of the invention will be described with reference to FIG. 13.

A sample container carrier 11B according to the present embodiment shown in FIG. 13 includes a first structural body 30B whose contact area with the transfer surface 21 is smaller than a contact area of the second structural body 40 with the transfer surface 21, instead of the ball bearing 31 as a component that comes into contact with the transfer surface 21 at a low coefficient of friction in the first structural bodies 30, 30A of the sample container carriers 11, 11A according to Embodiment 1 described above, so that the coefficient of friction of the first structural body 30B against the transfer surface 21 is smaller than that of the coefficient of friction of the second structural body 40. In this case, it is desirable that the coefficient of friction of a material constituting the first structural body 30B is substantially equal to the coefficient of friction of the second structural body 40, and adjustment can be made by adjusting the contact area.

For example, as shown in FIG. 13, when the coefficient of friction is sufficiently smaller than the bottom part of the second structural body 40 at a second decimal place or less, a pin 34 that comes into point contact with the transfer surface 21 is provided in the first structural body 30B as in the sample container carrier 11B in the present embodiment, so that a component having a smaller coefficient of friction than the second structural body 40 can be provided.

The other configuration and operation are substantially the same as those of the sample container carrier 11, 11A and the transfer apparatus including the sample container carrier 11, 11A according to Embodiment 1 described above, and a detailed description thereof will be omitted.

In the sample container carrier 11B and the transfer apparatus in which the contact area between the first structural body 30B and the transfer surface 21 is smaller than the contact area between the second structural body 40 and the transfer surface 21 according Embodiment 2 of the invention, substantially the same effects as those obtained by the sample container carrier 11, 11A and the transfer apparatus including the sample container carrier 11, 11A according to Embodiment 1 can also be obtained.

### <Embodiment 3>

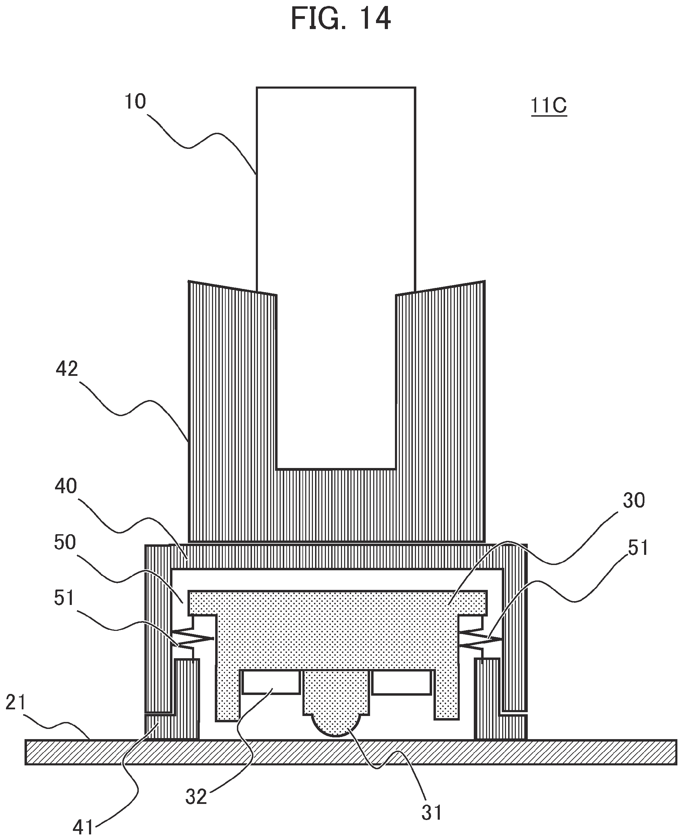

The sample container carrier 11 and a transfer apparatus according to Embodiment 3 of the invention will be described with reference to FIG. 14.

A sample container carrier 11C according to the present embodiment shown in FIG. 14 is obtained by further providing, in the structure of the sample container carrier 11 according to Embodiment 1, an elastic body that couples the first structural body 30 and the second structural body 40, such as a compression spring 51, in the space 50 between the first structural body 30 and the second structural body 40.

A spring constant of the compression spring 51 is set to a value such that the ball bearing 31 is brought into contact with the transfer surface 21 by a magnetic force acting between the electromagnet 22 disposed below the transfer surface 21 and the ring-shaped magnetic element 32 in the sample container carrier 11. It is desirable that the compression spring 51 is compressed when the first structural body 30 receives a downward force, and generates an elastic force in a direction of repulsion.

When the first structural body 30 and the second structural body 40 are coupled by the compression spring 51, an elastic force in a downward direction acts on the second structural body 40, and since the ball bearing 31 is constantly in contact with the transfer surface 21 during transfer and a spring stroke is constant, the elastic force is not increased or decreased by the electromagnetic force. Therefore, a constant dynamic friction force is generated between the second structural body 40 and the transfer surface 21, which is similar to Embodiment 1 or the like.

On the other hand, in the present embodiment in which the elastic body such as the compression spring 51 is provided, it is possible to lift up the first structural body 30 from a contact surface with the second structural body 40 at a timing when the electromagnet 22 is not provided directly below the sample container carrier 11C. Advantages of the present embodiment are as follows.

In the same sample inspection automation system 300, there are advantages in a transfer method different from the transfer method using the electromagnetic force, for example, a transfer method in which no magnetic element is provided below the sample container carrier 11, such as a belt line. The first advantage is that the ball bearing 31 does not come into contact with a belt, and therefore a transfer distance of the sample container carrier 11 has no influence on the product life of the first structural body 30 and a contact surface. The second advantage is that the sample container carrier 11 can be prevented from slipping unintentionally due to the ball bearing 31 when the sample container carrier 11 is to be stopped.

The other configuration and operation are substantially the same as those of the sample container carrier 11, 11A and the transfer apparatus including the sample container carrier 11, 11A according to Embodiment 1 described above, and a detailed description thereof will be omitted.

In the sample container carrier 11C and the transfer apparatus according to Embodiment 3 of the invention , substantially the same effects as those obtained by the sample container carrier 11, 11A and the transfer apparatus including the sample container carrier 11, 11A according to Embodiment 1 or the sample container carrier 11B and the transfer apparatus including the sample container carrier 11B according to Embodiment 2 can also be obtained.

Further, since the sample container carrier 11C further includes the compression spring 51 that is provided in the space 50 and that couples the first structural body 30 and the second structural body 40, it is possible to perform transfer suitably corresponding to a transfer method different from the transfer method using an electromagnetic force.

A structure in which the first structural body 30 and the second structural body 40 are coupled by an elastic body as in the present embodiment can also be applied to the sample container carrier 11A according to the modification of Embodiment 1 or the sample container carrier 11B according to Embodiment 2, in addition to the sample container carrier 11 according to Embodiment 1.

### <Embodiment 4>

The sample container carrier 11 and a transfer apparatus according to Embodiment 4 of the invention will be described.

The sample container carrier according to the present embodiment does not require that the coefficient of friction of the second structural body 40 at an outer peripheral side to be smaller than the coefficient of friction of the first structural body 30, 30A, 30B at an inner peripheral side, which are divided into two structures, as in the sample container carrier 11, 11A according to Embodiment 1, or the sample container carrier 11B according to Embodiment 2, or the sample container carrier 11C according to Embodiment 3. If the coefficient of friction of the first structural body 30, 30A, 30B that receives an electromagnetic force is preferably smaller than the coefficient of friction of the second structural body 40 that is made of a non-magnetic material, the first structural body that receives an electromagnetic force is preferably located on an outer peripheral side of the second structural body 40 made of a non-magnetic material.

The other configuration and operation are substantially the same as those of the sample container carrier 11, 11A, 11B, 11C and the transfer apparatus including the sample container carrier 11, 11A, 11B, 11C according to any of Embodiments 1, 2, 3 described above, and a detailed description thereof will be omitted.

In the sample container carrier and the transfer apparatus according to Embodiment 4 of the invention, substantially the same effects as those obtained by the sample container carrier 11, 11A, 11B, 11C, and the transfer apparatus including the sample container carrier 11, 11A, 11B, 11C according to any of Embodiments 1, 2, 3 can also be obtained.

### <Others>

The invention is not limited to the embodiments described above, and includes various modifications. The embodiments described above have been described in detail to facilitate understanding of the invention, and the invention is not necessarily limited to those including all the configurations described above.

A part of a configuration in one embodiment can be replaced with a configuration in another embodiment, and a configuration in one embodiment can also be added to a configuration in another embodiment. Another configuration may be added to a part of a configuration in each embodiment, and a part of a configuration in each embodiment may also be deleted or replaced with another configuration.

### Reference Signs List

10: sample container
11: 11A, 11B, 11C: sample container carrier
20: transfer module (transfer apparatus)
21: transfer surface
22: electromagnet (magnetic pole)
23: sensor
30: 30A, 30B: first structural body
31: ball bearing (rolling element)
32: ring-shaped magnetic element
33: cylindrical magnetic element
34: pin
40: second structural body
41: bottom part
42: holder
50: space
51: compression spring (elastic body)
100: sample preprocessing apparatus
111: system control device
150: sample transfer apparatus
200: automatic analyzer
300: sample inspection automation system

## Claims

1. A sample container carrier which holds a sample container containing a sample and is transferred by electromagnetic force, comprising a first structural body and a second structural body which contact with a transfer surface on which the sample container carrier moves smoothly,
wherein: the first structural body has a magnetic element;
the second structural body has a holder for the sample container;
a space is defined between the first structural body and the second structural body;
the first structural body and the second structural body are coupled so as to be movable relatively to each other in a vertical direction; and
the first structural body has a coefficient of friction that is smaller than the coefficient of friction of the second structural body.

2. The sample container carrier according to claim 1, wherein the second structural body is made of a non-magnetic material and electromagnetic force and magnetic force are exerted on only the first structural body.

3. The sample container carrier according to claim 1, further comprising an elastic body which is provided in the space and couples the first structural body and the second structural body.

4. The sample container carrier according to claim 1, wherein the first structural body is provided with a rolling element facing toward the transfer surface.

5. The sample container carrier according to claim 1, wherein a contact area between the first structural body and the transfer surface is smaller than a contact area between the second structural body and the transfer surface.

6. A transfer apparatus comprising:
a transfer surface on which a sample container carrier which holds a sample container containing a sample moves smoothly; and magnetic poles which are arranged on a lower side of the transfer surface, and which to transfer the sample container carrier by electromagnetic force, wherein: the sample container carrier has a first structural body and a second structural body which contact with the transfer surface; the first structural body has a magnetic element;
the second structural body has a holder for the sample container;
a space is defined between the first structural body and the second structural body, and the first structural body and the second structural body are coupled so as to be movable relatively to each other in a vertical direction; and
the first structural body has a coefficient of friction that is smaller than the coefficient of friction of the second structural body.
